# EUROPEAN PATENT APPLICATION

(11) **EP 2 267 522 A1**
(43) Date of publication of application: **29.12.2010**
(21) Application number: 08873915.6
(22) Date of filing: 17.12.2008
(51) Int. Cl.: G02F 1/1339, G02F 1/1368

(54) **LIQUID CRYSTAL DISPLAY PANEL**

(30) Priority: 14.04.2008 JP 2008104575
(71) Applicant: Sharp Kabushiki Kaisha, Osaka-shi, Osaka 545-8522 (JP)
(72) Inventor: MORIYA, Yoshimizu, Osaka-shi, Osaka 545-8522 (JP); KAISE, Yasuyoshi, Osaka-shi, Osaka 545-8522 (JP); YOSHIDA, Hiroshi, Osaka-shi, Osaka 545-8522 (JP); TASAKA, Yasutoshi, Osaka-shi, Osaka 545-8522 (JP)
(74) Representative: Müller - Hoffmann & Partner
(86) International application number: PCT/JP2008/003825
(87) International publication number: WO 2009/128123

(57) **Abstract**

A liquid crystal display panel includes: an active matrix substrate (20a) having a plurality of switching elements (5), an insulating film that is formed to cover the switching elements (5) and has through holes (16a), and a plurality of pixel electrodes (17) formed on the insulating film to be connected to the switching elements (5) via the through holes (16a); and a counter substrate having photo-spacers (23a) configured to maintain the thickness of a liquid crystal layer. The panel includes a first pixel row having a plurality of pixels in a row in which the photo-spacers (23a) are placed to stand on one side of the corresponding through holes (16a), and a second pixel row having a plurality of pixels in a row in which the photo-spacers (23a) are placed to stand on the opposite side of the corresponding through holes (16a).

## Description

### TECHNICAL FIELD

The present disclosure relates to a liquid crystal display panel, and more particularly to a liquid crystal display panel whose cell thickness is maintained by columnar photo-spacers formed on a substrate.

### BACKGROUND ART

A liquid crystal display panel includes a pair of substrates opposed to each other and a liquid crystal layer interposed between the substrates. In such a liquid crystal display panel, the thickness of the liquid crystal layer, or the cell thickness, is kept constant by spacers provided between the substrates. As the spacers, those in the form of beads have been conventionally used, which are scattered on one of the paired substrates. In recent years, however, to enhance the uniformity of the cell thickness, columnar photo-spacers formed on one of the paired substrates by photolithography are being used in place of the bead spacers.

For example, Patent Document 1 discloses a transflective liquid crystal display having protrusions in pixels to serve as spacers and also regulate the alignment of liquid crystal molecules, and a method for fabricating such a liquid crystal display.
PATENT DOCUMENT 1: Japanese Patent Publication No. P2006-330602

### SUMMARY OF THE INVENTION

### TECHNICAL PROBLEM

A liquid crystal display panel of an active matrix drive scheme includes an active matrix substrate and a counter substrate as the paired substrates described above.

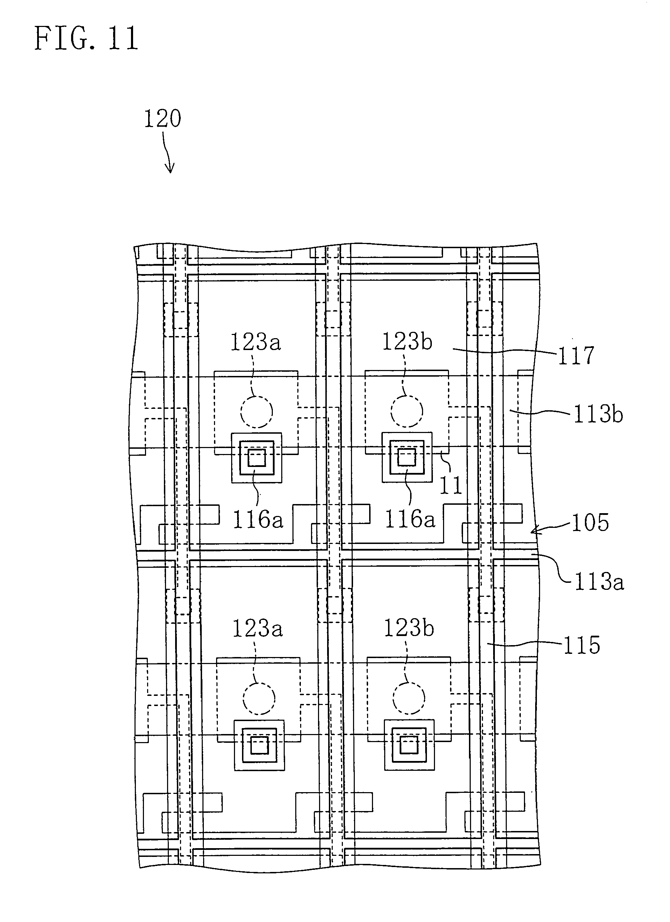

FIG. 11 is a plan view of a conventional active matrix substrate 120.

As shown in FIG. 11, the active matrix substrate 120 includes: a plurality of pixel electrodes 117 arranged in a matrix; a plurality of gate lines 113a extending in parallel with each other along the short sides of the pixel electrodes 117; a plurality of source lines 115 extending in parallel with each other along the long sides of the pixel electrodes 117; a plurality of capacitor lines 113b extending in parallel with each other along the gate lines 113a; and a plurality of thin film transistors (TFTs) provided at intersections of the gate lines 113a and the source lines 115. In each of pixels as the minimum units of an image, as shown in FIG. 11, the TFT 105 and the pixel electrode 117 are connected to each other via a through hole 116a formed through a resin film (not shown) covering the TFT 105. In FIG. 11, photo-spacers 123a (and 123b) formed on the counter substrate are shown by the two-dot chain lines. The photo-spacers 123b are formed to be shorter than the photo-spacers 123a. With this configuration, when the panel surface is depressed, the photo-spacers 123b will come into contact with the surface of the active matrix substrate to maintain the cell thickness. Also, in a liquid crystal display panel fabricated by one-drop filling, if a cold shock is loaded on the panel surface, this configuration will resist generation of bubbles.

In the case of forming the photo-spacers 123a on the counter substrate as described above, the heads of the photo-spacers 123a may possibly sink into the recessed through holes 116a formed on the active matrix substrate 120 if a displacement occurs at the time of bonding between the active matrix substrate 120 and the counter substrate. In such an event, the cell thickness may become small in regions having photo-spacers 123a whose heads sink into the corresponding through holes 116a, causing failure in keeping the cell thickness constant. This will make stable cell thickness control by the photo-spacers 123a difficult.

To overcome the above problem, as shown in FIG. 11, the through holes 116a formed on the active matrix substrate 120 and the photo-spacers 123a formed on the counter substrate may be placed apart from each other as viewed from top, to ensure that the heads of the photo-spacers 123a of the counter substrate are prevented from sinking into the through holes 116a of the active matrix substrate 120. Practically, however, in a liquid crystal display panel, as pixels become finer, the spacing between the source lines 115 becomes smaller and smaller. Therefore, the through holes 116a and the photo-spacers 123a are placed apart from each other as viewed from top by forming the photo-spacers 123a or the through holes 116a to protrude into transmission regions as viewed from top. In FIG. 11, each transmission region refers to a region of an area surrounded by two adjacent gate lines 113a and two adjacent source lines 115 that overlaps neither the capacitor line 113b nor the TFT 105, and a region transmitting light from a backlight to contribute to image display, for example. When the photo-spacers 123a or the through holes 116a protrude into the transmission regions as viewed from top, the portions of the protrusion in the transmission regions are no more contributable to image display, whereby the aperture ratio of the pixels decrease. For example, when the photo-spacers 123a are formed to protrude into the transmission regions, such portions of the photo-spacers 123a must be shielded because the alignment of the liquid crystal layer tends to be disturbed near the photo-spacers 123a, resulting in decreasing the aperture ratio of the pixels. Likewise, the aperture ratio of the pixels will also decrease when the through holes 116a are formed to protrude into the transmission regions because the alignment of the liquid crystal layer tends to be disturbed near the through hole 116a. In addition, light leakage may occur, possibly causing contrast degradation, in the regions where the alignment of the liquid crystal layer is disturbed near the photo-spacers 123a and the through holes 16a.

As described above, in the conventional liquid crystal display panel, it is difficult to keep the aperture ratio of pixels from decreasing while maintaining the stability of cell thickness control, due to the placement of through holes and photo-spacers.

In view of the above problem, it is an object of the present invention to reduce decrease in the aperture ratio of pixels while maintaining the stability of cell thickness control by photo-spacers.

### SOLUTION TO THE PROBLEM

To attain the above object, according to the present invention, there are provided first pixel rows in which photo-spacers are placed to stand on one side of corresponding through holes and second pixel rows in which photo-spacers are placed to stand on the opposite side of corresponding through holes.

Specifically, the liquid crystal display panel of the present invention includes: an active matrix substrate; a counter substrate opposed to the active matrix substrate; and a liquid crystal layer interposed between the active matrix substrate and the counter substrate, the active matrix substrate including a plurality of switching elements formed on a first transparent substrate, an insulating film formed to cover the switching elements, and a plurality of pixel electrodes formed on the insulating film in a matrix to be connected to the corresponding switching elements via through holes formed through the insulating film for the respective switching elements, the counter substrate including photo-spacers formed to stand on a second transparent substrate to maintain the thickness of the liquid crystal layer, a plurality of pixels being defined in a matrix in correspondence with the pixel electrodes, wherein the liquid crystal display panel includes a first pixel row having a plurality of pixels in a row in which the photo-spacers are placed to stand on one side of the corresponding through holes, and a second pixel row having a plurality of pixels in a row in which the photo-spacers are placed to stand on the opposite side of the corresponding through holes.

The liquid crystal display panel having the configuration described above has a first pixel row including a plurality of pixels in a row in which the photo-spacers are placed to stand on one side of their corresponding through holes and a second pixel row including a plurality of pixels in a row in which the photo-spacers are placed to stand on the opposite side of their corresponding through holes. Therefore, even if the heads of photo-spacers of the counter substrate sink into the corresponding through holes of the active matrix substrate in the first pixel row due to a displacement and the like at the time of bonding between the active matrix substrate and the counter substrate, such an event that the heads of photo-spacers of the counter substrate sink into the corresponding through holes of the active matrix substrate will not occur in the second pixel row. In this case, since the heads of the photo-spacers of the counter substrate in the pixels of the second pixel row are in contact with the portions of the pixel electrodes located outside the through holes of the active matrix substrate, the cell thickness is maintained reliably, and thus the stability of the cell thickness control by the photo-spacers is maintained. In addition, since the photo-spacers are placed to stand on one side or the opposite side of the through holes, the spacing between the photo-spacers and the corresponding through holes as viewed from top is small. Therefore, since the photo-spacers or the through holes are kept from protruding into the transmission regions, decrease in the aperture ratio of the pixels is reduced. Accordingly, it is possible to reduce decrease in the aperture ratio of the pixels while maintaining the stability of the cell thickness control by the photo-spacers.

The first pixel row and the second pixel row may be adjacent to each other.

In the configuration described above, in which the first pixel row and the second pixel row are adjacent to each other, the cell thickness can be practically maintained reliably in one of two adjacent pixel rows.

The insulating film may be a resin film.

In the configuration described above, in which the insulating film is a resin film that is generally thicker than an inorganic insulating film, the through holes formed through the insulating film are deep and have inner walls inclined to be wider toward the top, and this may impair stable cell thickness control. However, provided with the first pixel row and the second pixel row as described above, stable cell thickness control can be attained.

The photo-spacers may include first photo-spacers and second photo-spacers shorter than the first photo-spacers.

In the configuration described above, in which the second photo-spacers are shorter than the first photo-spacers, the heads of the first photo-spacers are in contact with the surface of the active matrix substrate in normal times, to maintain the cell thickness. When the panel surface is depressed, the heads of the second photo-spacers will come into contact with the surface of the active matrix substrate, to maintain the cell thickness. Also, in a liquid crystal display panel fabricated by one-drop filling, the difference in elastic characteristic between the photo-spacers and the second transparent substrate is small compared with the case where all the photo-spacers are the first photo-spacers. Therefore, if a cold shock is loaded on the panel surface, the photo-spacers will deflect following deflection of the second transparent substrate, causing resistance to formation of minute space and the like therebetween, and thus generation of bubbles can be reduced.

The photo-spacers may be formed to be centers of alignment in the liquid crystal layer.

In the configuration described above, the photo-spacers are the centers of alignment in the liquid crystal layer. Therefore, in a vertical alignment (VA) scheme liquid crystal display panel, the photo-spacers not only maintain the cell thickness but also regulate the alignment of the liquid crystal layer.

The active matrix substrate may include a plurality of gate lines formed to extend in parallel with each other, a plurality of source lines formed to extend in parallel with each other in a direction crossing the gate lines, and a plurality of capacitor lines formed to extend in parallel with each other along the gate lines, and the photo-spacers and the corresponding through holes may be formed along the source lines to overlap the capacitor lines.

In the configuration described above, the photo-spacers and the through holes are formed along the corresponding source lines to overlap the corresponding capacitor lines. Therefore, in a high-definition liquid crystal display panel in which the source lines are arranged with narrow spacing therebetween, decrease in the aperture ratio of the pixels is practically reduced.

The active matrix substrate may include a plurality of gate lines formed to extend in parallel with each other, a plurality of source lines formed to extend in parallel with each other in a direction crossing the gate lines, and a plurality of capacitor lines formed to extend in parallel with each other along the gate lines, and the photo-spacer and the corresponding through hole may be formed along the gate lines to overlap the capacitor lines.

In the configuration described above, the photo-spacers and the through holes are formed along the corresponding gate lines to overlap the corresponding capacitor lines. Therefore, in a high-definition liquid crystal display panel in which the source lines are arranged with narrow spacing therebetween, decrease in the aperture ratio of the pixels is practically reduced. Also, since the spacing between each drain connection electrode connected to the drain region of the semiconductor layer of each TFT provided as a switching element, for example, and the corresponding source line can be designed to be wide, leakage failure and the like in the same layer between the drain connection electrode and the source line can be reduced.

Alternatively, the liquid crystal display panel of the present invention includes: an active matrix substrate; a counter substrate opposed to the active matrix substrate; and a liquid crystal layer interposed between the active matrix substrate and the counter substrate, the active matrix substrate including a plurality of switching elements formed on a first transparent substrate, an insulating film formed to cover the switching elements, and a plurality of pixel electrodes formed on the insulating film in a matrix to be connected to the corresponding switching elements via through holes formed through the insulating film for the respective switching elements, the counter substrate including first photo-spacers and the second photo-spacers shorter than the first photo-spacers, both formed to stand on a second transparent substrate to maintain the thickness of the liquid crystal layer, wherein the first photo-spacers are formed not to overlap the through holes, and the second photo-spacers are formed to overlap the through holes.

In the configuration described above, the first photo-spacers that are in contact with the surface of the active matrix substrate in normal times are placed not to overlap the corresponding through holes. Thus, the cell thickness can be maintained reliably. Also, the second photo-spacers that will come into contact with the surface of the active matrix substrate when the panel surface is depressed are placed to overlap the through holes. Thus, decrease in the aperture ratio of the pixels is reduced. Accordingly, it is possible to reduce decrease in the aperture ratio of pixels while maintaining the stability of the cell thickness control by the photo-spacers.

### ADVANTAGES OF THE INVENTION

According to the present invention, there are provided first pixel rows in which the photo-spacers are placed to stand on one side of the corresponding through holes and second pixel rows in which the photo-spacers are placed to stand on the opposite side of the corresponding through holes. Therefore, it is possible to reduce decrease in the aperture ratio of pixels while maintaining the stability of the cell thickness control by photo-spacers.

### BRIEF DESCRIPTION OF THE DRAWINGS

[FIG. 1] FIG. 1 is a plan view of an active matrix substrate 20a constituting a liquid crystal display panel of the first embodiment.
[FIG. 2] FIG. 2 is a cross-sectional view of the active matrix substrate 20a, together with a liquid crystal display panel 50a including the same, taken along line II-II in FIG. 1.
[FIG. 3] FIG. 3 is a cross-sectional view of the active matrix substrate 20a taken along line III-III in FIG. 1.
[FIG. 4] FIG. 4 is a plan view schematically showing the liquid crystal display panel 50a.
[FIG. 5] FIG. 5 is a plan view schematically showing a liquid crystal display panel 50b of the second embodiment.
[FIG. 6] FIG. 6 is a plan view schematically showing a liquid crystal display panel 50c of the third embodiment.
[FIG. 7] FIG. 7 is a plan view schematically showing a liquid crystal display panel 50d of the fourth embodiment.
[FIG. 8] FIG. 8 is a plan view of an active matrix substrate 20e constituting a liquid crystal display panel of the fifth embodiment.
[FIG. 9] FIG. 9 is a cross-sectional view of the active matrix substrate 20e, together with a liquid crystal display panel 50e including the same, taken along line IX-IX in FIG. 8.
[FIG. 10] FIG. 10 is a plan view schematically showing a liquid crystal display panel 50f of the sixth embodiment.
[FIG. 11] FIG. 11 is a plan view of a conventional active matrix substrate 120.

### DESCRIPTION OF REFERENCE CHARACTERS

- La: First Pixel Row
- Lb: Second Pixel Row
- P: Pixel
- 5: TFT (Switching Element)
- 10a: First Transparent Substrate
- 10b: Second Transparent Substrate
- 13a: Gate Line
- 13b: Capacitor Line
- 15a: Source Line
- 16: Resin Film (Insulating Film)
- 16a: Through Hole
- 17: Pixel Electrode
- 20a, 20e: Active Matrix Substrate
- 23a: First Photo-Spacer
- 23b: Second Photo-Spacer
- 30a, 30e: Counter Substrate
- 40: Liquid Crystal Layer
- 50a-50f: Liquid Crystal Display Panel

### DESCRIPTION OF EMBODIMENTS

Embodiments of the present invention will be described hereinafter in detail with reference to the accompanying drawings. It should be noted that the present invention is not limited to the embodiments to follow.

### (First Embodiment)

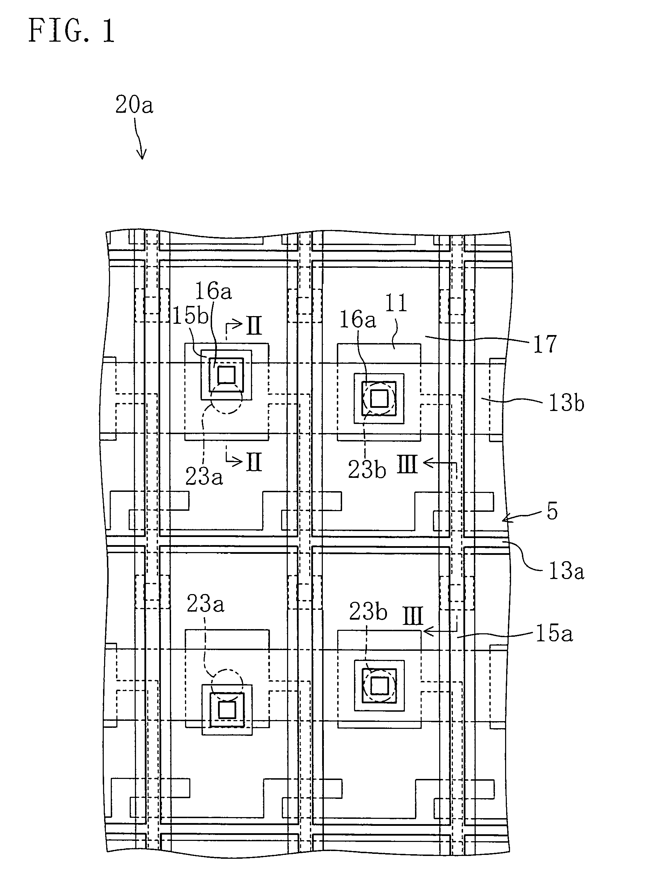

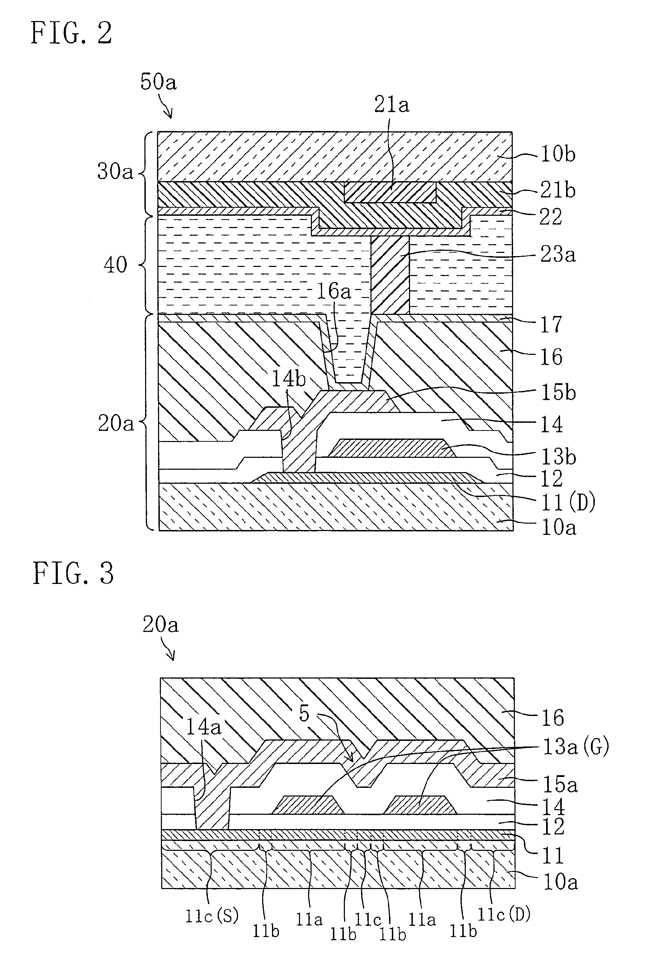

FIGS. 1-4 show a liquid crystal display panel of the first embodiment of the present invention. Specifically, FIG. 1 is a plan view of an active matrix substrate 20a constituting the liquid crystal display panel of the first embodiment. FIG. 2 is a cross-sectional view of the active matrix substrate 20a, together with a liquid crystal display panel 50a including the same, taken along line II-II in FIG. 1, and FIG. 3 is a cross-sectional view of the active matrix substrate 20a taken along line III-III in FIG. 1. In FIG. 1, pixel electrodes 17 placed as the top layer of the active matrix substrate 20a, as will be described later, are shown by the bold lines.

As shown in FIG. 2, the liquid crystal display panel 50a includes the active matrix substrate 20a and a counter substrate 30a opposed to each other, a liquid crystal layer 40 interposed between the substrates 20a and 30a, and a seal material for bonding the substrates 20a and 30a to each other and sealing the liquid crystal layer 40 between the substrates 20a and 30a.

As shown in FIGS. 1-3, the active matrix substrate 20a includes: a first transparent substrate 10a such as a glass substrate; a semiconductor layer 11 having approximately L-shaped portions formed on the first transparent substrate 10a; a gate insulating film 12 formed to cover the semiconductor layer 11; a plurality of gate lines 13a formed on the gate insulating film 12 to extend in parallel with each other; a plurality of capacitor lines 13b formed on the gate insulating film 12 to extend in parallel with each other along the gate lines 13a; an interlayer insulating film 14 formed to cover the gate lines 13a and the capacitor lines 13b; a plurality of source lines 15a formed on the interlayer insulating film 14 to extend in parallel with each other in a direction orthogonal to the direction of the gate lines 13a; a plurality of drain connection electrodes 15b formed on the interlayer insulating film 14 as islands between the source lines 15a; a resin film 16 formed to cover the source lines 15a and the drain connection electrodes 15b; a plurality of pixel electrodes 17 formed in a matrix on the resin film 16; and an alignment film (not shown) formed to cover the pixel electrodes 17.

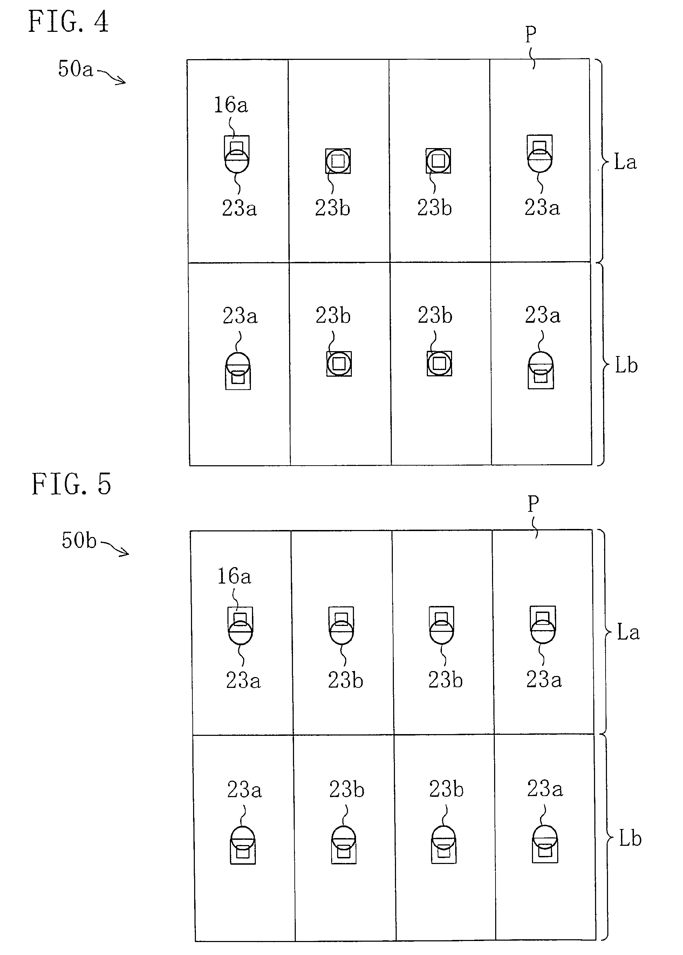

In the liquid crystal display panel 50a, a plurality of pixels P (see FIG. 4 to be described later) as the minimum units of an image are defined in a matrix to correspond to the pixel electrodes 17. Each pixel P has a region (transmission region) transmitting light from a backlight, for example, to contribute to image display, which is a region of an area surrounded by two adjacent gate lines 13a and two adjacent source lines 15a that overlaps neither the capacitor line 13b nor a TFT 5 to be described later.

In the active matrix substrate 20a, also, the TFT 5 is provided as a switching element at each of intersections of the gate lines 13a and the source lines 15a as shown in FIG. 1.

As shown in FIG. 3, the TFT 5 includes: a gate electrode G including a portion of the gate line 13a and a protrusion extending laterally from the gate line 13a; the semiconductor layer 11 in which defined are channel regions 11a underlying the gate electrode G, lightly-doped regions (LDD regions) 11b outside the channel regions 11a, and heavily-doped regions 11c including a source region S and a drain region D outside the lightly-doped regions 11b; and the gate insulating film 12 provided between the gate electrode G and the semiconductor layer 11. As shown in FIGS. 1 and 3, the source region S is connected to the source line 15a via an active contact hole 14a formed through the layered film made of the gate insulating film 12 and the interlayer insulating film 14. As shown in FIG. 2, the drain region D is connected to the drain connection electrode 15b via an active contact hole 14b formed through the layered film made of the gate insulating film 12 and the interlayer insulating film 14. The drain connection electrode 15b is then connected to the pixel electrode 17 via the through hole 16a formed through the resin film 16 as shown in FIGS. 1 and 2.

Also, the drain region D is formed to underlie the capacitor line 13b, as shown in FIGS. 1 and 2, constituting a storage capacitor together with the capacitor line 13b and the gate insulating film 12 provided therebetween.

As shown in FIG. 2, the counter substrate 30a includes: a second transparent substrate 10b such as a glass substrate; a black matrix 21a formed in a lattice shape on the second transparent substrate 10b; a color filter layer 21b including colored layers such as red layers, green layers, and blue layers formed in the openings of the lattice of the black matrix 21a; a common electrode 22 formed to cover the color filter layer 21; first photo-spacers 23a and second photo-spacers 23b (see FIG. 1) formed to stand on the common electrode 22; and an alignment film (not shown) formed to cover the common electrode 22. In the plan view of the active matrix substrate 20a of FIG. 1, the first photo-spacers 23a and the second photo-spacers 23b of the counter substrate 30a are shown by the two-dot dashed lines.

The first photo-spacers 23a, having a height of about 4.5 µm, for example, are in contact with the surface of the active matrix substrate 20a (surfaces of the pixel electrodes 17), to maintain the thickness of the liquid crystal layer 40, or the cell thickness.

The second photo-spacers 23b, having a height of about 4.2 µm, for example, which are shorter than the first photo-spacers 23a, will come into contact with the surface of the active matrix substrate 20a (surfaces of the pixel electrodes 17) when the panel surface is depressed, to maintain the thickness of the liquid crystal layer 40. Having such second photo-spacers 23b shorter than the first photo-spacers 23a, the difference in elastic characteristic between the photo-spacers and the second transparent substrate 10b is small, compared with the case where all the photo-spacers are the first photo-spacers 23a, when the liquid crystal display panel 50a is fabricated by one-drop filling. Therefore, if a cold shock is loaded on the panel surface, the photo-spacers will deflect following deflection of the second transparent substrate 10b, causing resistance to formation of minute space and the like therebetween, and thus generation of bubbles is reduced.

FIG. 4 is a plan view schematically showing the liquid crystal display panel 50a. In FIG. 4, shown are the through holes 16a formed on the active matrix substrate 20a and the first and second photo-spacers 23a and 23b formed on the counter substrate 30a, which are both arranged in the pixels P.

As shown in FIG. 4, the liquid crystal display panel 50a includes first pixel rows La in which the first photo-spacers 23a are placed to stand on one side (lower side as viewed from FIG. 4) of the corresponding through holes 16a and second pixel rows Lb in which the first photo-spacers 23a are placed to stand on the opposite side (upper side as viewed from FIG. 4) of the corresponding through holes 16a.

In the liquid crystal display panel 50a, also, as shown in FIG. 4, the second photo-spacers 23b are placed to stand above the corresponding through holes 16a in both the first pixel rows La and the second pixel rows Lb. As examples of the number densities of the photo-spacers, when the size of each pixel P is about 30 µm × 90 µm, the density of the first photo-spacers 23a is about 11 pcs/mm², and the density of the second photo-spacers 23b is about 360 pcs/mm². When the size of each pixel P is about 40 µm × 120 µm, the density of the first photo-spacers 23a is about 11 pcs/mm², and the density of the second photo-spacers 23b is about 197 pcs/mm². When the size of each pixel P is about 50 µm × 150 µm, the density of the first photo-spacers 23a is about 11 pcs/mm², and the density of the second photo-spacers 23b is about 122 pcs/mm². It is preferred to allocate the first photo-spacers 23a in only pixels P displaying blue to reduce degradation of display quality.

In the liquid crystal display panel 50a having the configuration described above, a predetermined voltage is applied across the liquid crystal layer 40 interposed between the pixel electrodes 17 on the active matrix substrate 20a and the common electrode 22 on the counter substrate 30a, to change the aligned state of liquid crystal molecules constituting the liquid crystal layer 40, so that the transmittance of light passing inside the panel is adjusted for each pixel P, thereby to display an image.

Next, an example of the method for fabricating the liquid crystal display panel 50a of this embodiment will be described. The fabrication method of this embodiment includes an active matrix substrate production process, a counter substrate production process, and a one-drop filling bonding process.

### <Active Matrix Substrate Production Process>

First, an amorphous silicon film (thickness: about 50 nm) is formed on the entire of the first transparent substrate 10a such as a glass substrate by plasma chemical vapor deposition (CVD) using disilane and the like, for example, as the material gas, and then changed to a polysilicon film by heating with laser light irradiation and the like. The polysilicon film is then patterned by photolithography to form the semiconductor layer 11. A silicon oxide film or the like may be formed between the first transparent substrate 10a and the semiconductor layer 11 by plasma CVD, to form a basecoat film.

Subsequently, a silicon oxide film (thickness: about 100 nm), for example, is formed on the entire substrate including the semiconductor layer 11 by plasma CVD. to form the gate insulating film 12. Thereafter, the semiconductor layer 11 is doped with phosphorus or boron as an impurity via the gate insulating film 12.

A tantalum nitride film (thickness: about 50 nm) and a tungsten film (thickness: about 350 nm), for example, are formed sequentially on the surface of the gate insulating film 12 of the entire substrate by sputtering, and then patterned by photolithography to form the gate lines 13a and the capacitor lines 13b.

The semiconductor layer 11 is then doped with phosphorus or boron via the gate insulating film 12 using the gate lines 13a (gate electrodes G) as a mask, to form the channel regions 11a underlying the gate electrodes G.

Islands of a photoresist (not shown) are then formed to cover the gate electrodes G, and the semiconductor layer 11 is then doped with phosphorus or boron via the photoresist and the gate insulating film 12. Note that regions of the semiconductor layer 11 underlying the capacitor lines 13b have been separately doped with phosphorus or boron before formation of the capacitor lines 13b. Thereafter, the resultant substrate is heated for activation of the doped phosphorus or boron, to form the lightly-doped regions 11b and the heavily-doped regions 11c including the source regions S and the drain regions D.

Subsequently, on the entire substrate including the channel regions 11a, the lightly-doped regions 11b, and the heavily-doped regions 11c formed in the semiconductor layer 11, formed are a silicon nitride film (thickness: about 250 nm) and a silicon oxide film (thickness: about 700 nm) sequentially by plasma CVD, to form the interlayer insulating film 14. Portions of the layered film of the gate insulating film 12 and the interlayer insulating film 14 located above the source regions S and the drain regions D are then removed by etching, to form the active contact holes 14a and 14b, respectively.

On the entire substrate including the interlayer insulating film 14 having the active contact holes 14a and 14b, formed are a titanium film (thickness: about 100 nm), an aluminum film (thickness: about 350 nm), and a titanium film (thickness: about 100 nm), for example, sequentially by sputtering, and then patterned by photolithography, to form the source lines 15a and the drain connection electrodes 15b.

An acrylic resin, for example, is applied to the entire substrate including the source lines 15a and the drain connection electrodes 15b by spin coating, to form the resin film 16 (thickness: about 2 µm), and then portions of the resin film 16 located above the drain connection electrodes 15b are removed by etching, to form the through holes 16a.

An indium tin oxide (ITO) film (thickness: about 100 nm), for example, is then formed on the entire substrate including the resin film 16 having the through holes 16a by sputtering, and patterned by photolithography, to form the pixel electrodes 17.

Finally, a polyimide resin is applied to the entire substrate including the pixel electrodes 17 by printing and then rubbed, to form an alignment film.

In the manner described above, the active matrix substrate 20a can be produced.

### <Counter Substrate Production Process>

First, a photosensitive resist material colored in black, for example, is formed on the entire of the second transparent substrate 10b such as a glass substrate to a thickness of about 2 µm, and then patterned by photolithography, to form the black matrix 21a.

Subsequently, a photosensitive resist material colored in red, green, or blue, for example, is formed in the openings of the black matrix 21a to a thickness of about 2 µm, and then patterned by photolithography, to form a colored layer of the selected color (e.g., a red layer). This process is repeated for the other two colors, to form the other colored layers (e.g., a green layer and a blue layer), thereby forming the color filter layer 21b.

An ITO film (thickness: about 100 nm) is then formed on the substrate including the color filter layer 21b by sputtering, to form the common electrode 22. Note that, before formation of the ITO film on the substrate including the color filter layer 21b, an overcoat layer may be formed to cover the color filter layer 21b to improve the flatness.

Thereafter, a photosensitive acrylic resin is applied to the entire substrate including the common electrode 22 to a thickness of about 4.5 µm by spin coating, for example, and patterned by photolithography, to form the first photo-spacers 23a (height: about 4.5 µm) and the second photo-spacers 23b (height: about 4.2 µm). The first photo-spacers 23a and the second photo-spacers 23b are formed to have their predetermined heights in the following manner: the photosensitive acrylic resin is exposed to a light beam having a wavelength of 365 nm (i-line) or a light beam having wavelengths of 405 nm/436 nm (gh-line), for example, via a half-tone mask or a gray-tone mask having regions different in light transmittance under the conditions of a treatment time and a light intensity adjusted appropriately, and the light-exposed photosensitive acrylic resin is subjected to selective ashing, to obtain the predetermined heights.

Finally, a polyimide resin is applied to the entire substrate including the first photo-spacers 23a and the second photo-spacers 23b by printing and then rubbed, to form an alignment film.

In the manner described above, the counter substrate 30a can be produced.

### <One-Drop Filling Bonding Process>

First, a frame of a seal material made of a UV-curable/thermosetting resin and the like is drawn by a dispenser on the counter substrate 30a produced by the counter substrate production process described above.

Subsequently, a liquid crystal material is dropped into the region of the counter substrate 30a within the drawn frame of the seal material.

The counter substrate 30a having the dropped liquid crystal material and the active matrix substrate 20a produced by the active matrix substrate production process described above are bonded together under a reduced pressure. The bonded substrates are then exposed to the atmospheric pressure, to pressurize the surfaces of the bonded substrates.

Thereafter, the seal material sandwiched between the bonded substrates is irradiated with UV light, and then the bonded substrates are heated to cure the seal material.

In the manner described above, the liquid crystal display panel 50a can be fabricated.

As described above, the liquid crystal display panel 50a of this embodiment has the first pixel rows La each including a plurality of pixels P in a row in which the first photo-spacers 23a are placed to stand on one side of the corresponding through holes 16a and the second pixel rows Lb each including a plurality of pixels P in a row in which the first photo-spacers 23a are placed to stand on the opposite side of the corresponding through holes 16a. Therefore, even if the heads of the first photo-spacers 23a of the counter substrate 30a sink into the through holes 16a of the active matrix substrate 20a in the first pixel rows La due to a displacement at the time of bonding between the active matrix substrate 20a and the counter substrate 30a, such an event that the heads of the first photo-spacers 23a of the counter substrate 30a sink into the through holes 16a of the active matrix substrate 20a will not occur in the second pixel rows Lb. In this case, since the heads of the first photo-spacers 23a of the counter substrate 30a in the pixels P of the second pixel rows Lb are in contact with the portions of the pixel electrodes 17 located outside the through holes 16a of the active matrix substrate 20a, the cell thickness is maintained reliably. Thus, the stability of the cell thickness control by the first photo-spacers 23a is maintained. In addition, since the first photo-spacers 23a are placed to stand on one side or the opposite side of the corresponding through holes 16a, no margin is required for protection against bonding displacements, and thus the spacing between the first photo-spacers 23a and the corresponding through holes 16a as viewed from top can be reduced. Therefore, since the first photo-spacers 23a or the through holes 16a can be kept from protruding into the transmission regions, decrease in the aperture ratio of the pixels can be reduced. Accordingly, it is possible to reduce decrease in the aperture ratio of the pixels while maintaining the stability of the cell thickness control by the photo-spacers.

In addition, in the liquid crystal display panel 50a of this embodiment, the second photo-spacers 23b are shorter than the first photo-spacers 23a. Therefore, the heads of the first photo-spacers 23a are in contact with the surface of the active matrix substrate 20a in normal times, to maintain the cell thickness. When the panel surface is depressed, the heads of the second photo-spacers 23b will come into contact with the surface of the active matrix substrate 20a, to maintain the cell thickness. Also, in a liquid crystal display panel fabricated by one-drop filling, the difference in elastic characteristic between the photo-spacers and the second transparent substrate 10b is small compared with the case where all the photo-spacers are the first photo-spacers 23a. Therefore, if a cold shock is loaded on the panel surface, the photo-spacers will deflect following deflection of the second transparent substrate 10b, causing resistance to formation of minute space and the like therebetween, and thus generation of bubbles can be reduced.

Moreover, in the liquid crystal display panel 50a of this embodiment, the first and second photo-spacers 23a and 23b and the corresponding through holes 16a are placed along the corresponding source lines 15a to overlap the corresponding capacitor lines 13b. Therefore, in a high-definition liquid crystal display panel in which the source lines 15a are arranged with narrow spacing therebetween, in particular, decrease in the aperture of the pixels can be reduced.

Furthermore, in the liquid crystal display panel 50a of this embodiment, portions of the liquid crystal layer 40 located near the first photo-spacers 23a and the through holes 16a in which the alignment of liquid crystal tends to be disturbed can be kept from protruding into the transmission regions. Therefore, generation of light leakage and degradation of the contrast can be reduced. This eliminates or reduces the necessity of separately providing a light-shading film against light leakage and contrast degradation.

### (Second Embodiment)

FIG. 5 is a plan view schematically showing a liquid crystal display panel 50b of this embodiment. Note that, in the embodiments to follow, the same components as those in FIGS. 1-4 are denoted by the same reference numerals, and detailed description thereof is omitted.

In the liquid crystal display panel 50a of the first embodiment, each of the second photo-spacers 23b is placed to stand above the entire of the corresponding through hole 16a as shown in FIG. 4. In the liquid crystal display panel 50b of this embodiment, each of the second photo-spacers 23b is placed to stand above part of the corresponding through hole 16a as shown in FIG. 5.

In the liquid crystal display panel 50b of this embodiment, as in the first embodiment, it is possible to reduce decrease in the aperture ratio of the pixels while maintaining the stability of the cell thickness control by the photo-spacers.

### (Third Embodiment)

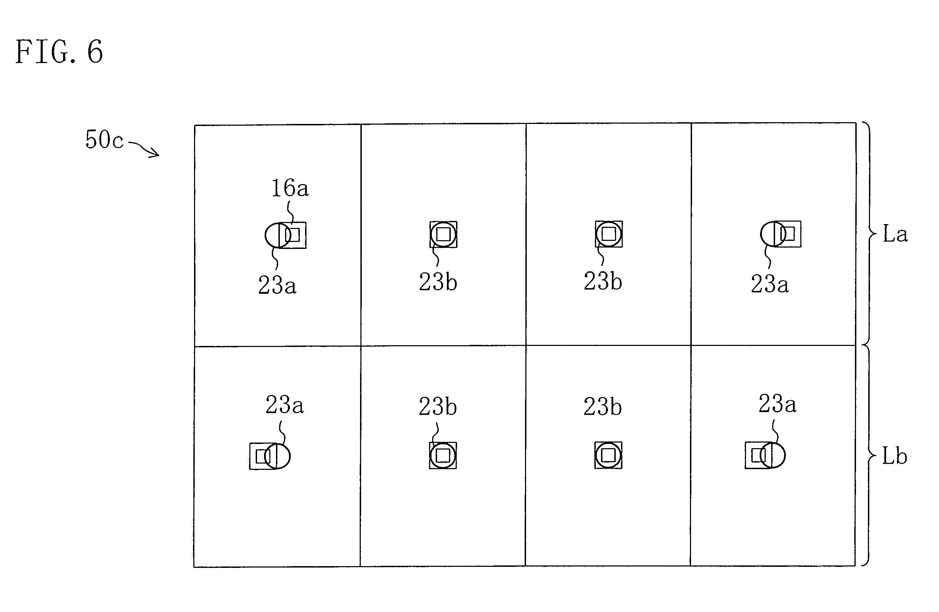

FIG. 6 is a plan view schematically showing a liquid crystal display panel 50c of this embodiment.

In the liquid crystal display panel 50a of the first embodiment and the liquid crystal display panel 50b of the second embodiment, the through holes 16a are displaced with respect to the first photo-spacers 23a along the source lines 15a (longitudinal direction as viewed from the figure) as shown in FIGS. 4 and 5. In the liquid crystal display panel 50c of this embodiment, the through holes 16a are displaced with respect to the first photo-spacers 23a along the gate lines 13a (lateral direction as viewed from the figure) as shown in FIG. 6.

More specifically, as shown in FIG. 6, the liquid crystal display panel 50c includes first pixel rows La in which the first photo-spacers 23a are placed to stand on one side (left side as viewed from FIG. 6) of the corresponding through holes 16a and second pixel rows Lb, each adjacent to each first pixel row La, in which the first photo-spacers 23a are placed to stand on the opposite side (right side as viewed from FIG. 6) of the corresponding through holes 16a.

In the liquid crystal display panel 50c of this embodiment, as in the first and second embodiments, it is possible to reduce decrease in the aperture ratio of the pixels while maintaining the stability of the cell thickness control by the photo-spacers.

In the liquid crystal display panel 50c of this embodiment, since the spacing between the first photo-spacers 23a and the corresponding through holes 16a as viewed from top can be reduced, the spacing between the source lines and the corresponding drain connection electrodes can be designed to be wide. Thus, leakage failure and the like in the same layer can be reduced.

### (Fourth Embodiment)

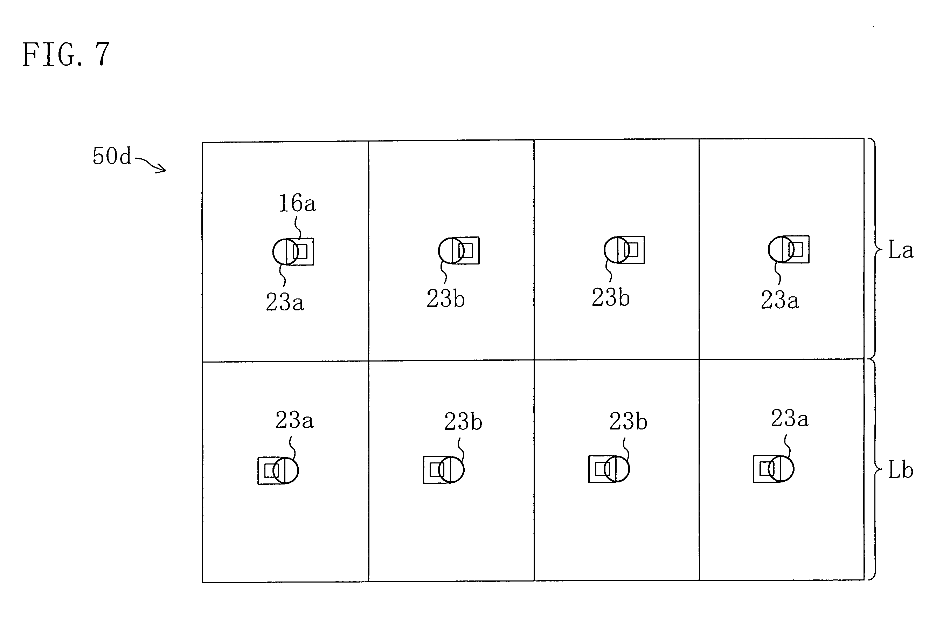

FIG. 7 is a plan view schematically showing a liquid crystal display panel 50d of this embodiment.

In the liquid crystal display panel 50c of the third embodiment, each of the second photo-spacers 23b is placed to stand above the entire of the corresponding through hole 16a as shown in FIG. 6. In the liquid crystal display panel 50d of this embodiment, each of the second photo-spacers 23b is placed to stand above part of the corresponding through hole 16a as shown in FIG. 7.

In the liquid crystal display panel 50d of this embodiment, as in the first to third embodiments described above, it is possible to reduce decrease in the aperture ratio of the pixels while maintaining the stability of the cell thickness control by the photo-spacers.

### (Fifth Embodiment)

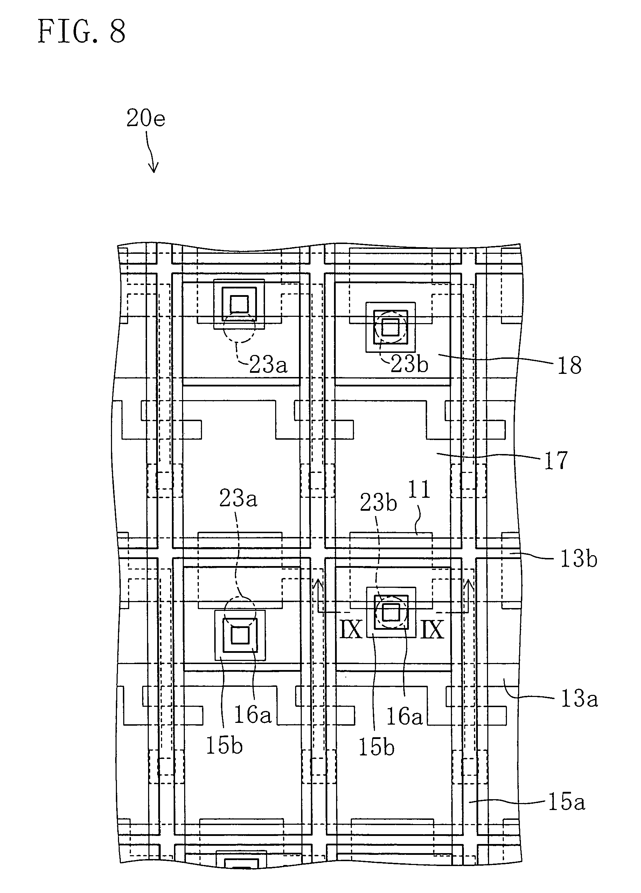

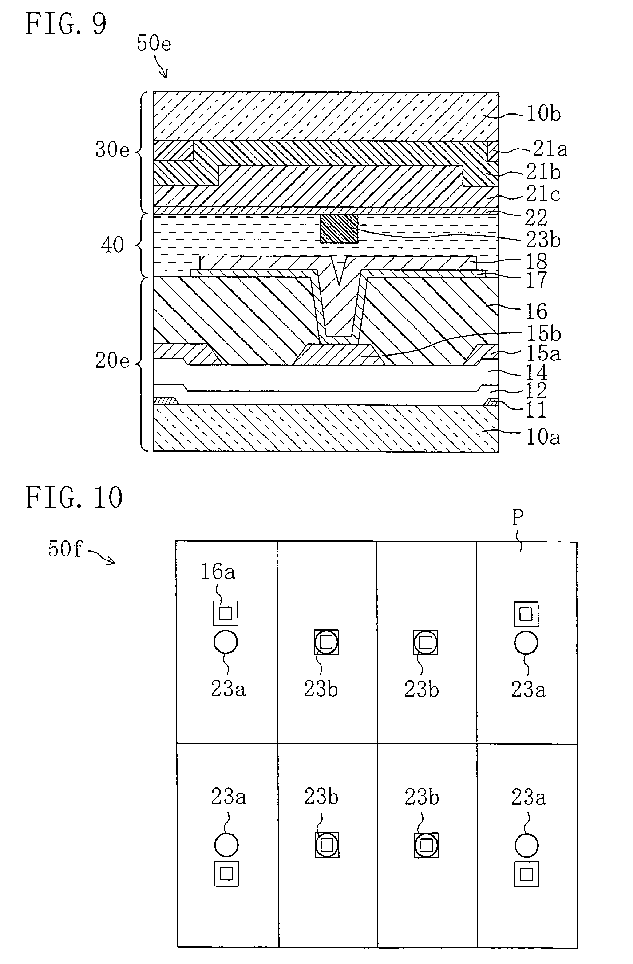

FIG. 8 is a plan view of an active matrix substrate 20e constituting a liquid crystal display panel of this embodiment. FIG. 9 is a cross-sectional view of the active matrix substrate 20e, together with a liquid crystal display panel 50e including the same, taken along line IX-IX in FIG. 8.

While transmissive liquid crystal display panels were taken as an example in the embodiments described above, a transflective liquid crystal display panel will be described in this embodiment.

More specifically, as shown in FIG. 9, the transflective liquid crystal display panel 50e includes: the active matrix substrate 20e and a counter substrate 30e opposed to each other; a liquid crystal display layer 40 interposed between the substrates 20e and 30e; and a seal material (not shown) for bonding the substrates 20e and 30e to each other and sealing the liquid crystal layer 40 between the substrates 20e and 30e.

In the active matrix substrate 20e, as shown in FIG. 9, a reflection electrode 18 is formed on each of the pixel electrodes 17 of the active matrix substrate 20a in the first embodiment described above. The reflection electrode 18, formed on each pixel electrode 17 in a portion between a gate line 13a and a capacitor line 13b adjacent to the gate line 13a, constitutes a reflection region for reflection-mode display. The portion of the pixel electrode 17 uncovered with the reflection electrode 18 constitutes a transmission region for transmission-mode display.

The active matrix substrate 20e can be produced in the following manner. In the active matrix substrate production process described in the first embodiment, after formation of the pixel electrodes 17, a molybdenum film and an aluminum film, for example, are formed sequentially on the entire substrate including the pixel electrodes 17 by sputtering, and then patterned by photolithography, to form the reflection electrodes 18.

In the counter substrate 30e, as shown in FIG. 9, a white layer 21c is formed between the color filter layer 21b and the common electrode 22 of the counter substrate 30a in the first embodiment. The white layer 21c is formed to overlap each of the reflection regions 18 of the active matrix substrate 20e, so that the cell thickness in the reflection region becomes a half of the cell thickness in the transmission region.

The counter substrate 30e can be produced in the following manner. In the counter substrate production process described in the first embodiment, after formation of the color filter layer 21b, a colorless photosensitive resist material is formed on the entire substrate including the color filter layer 21b, and then patterned by photolithography, to form the white layers 21c.

In the liquid crystal display panel 50e of this embodiment, the stability of the cell thickness control by the photo-spacers is maintained, and the spacing between the source lines and the corresponding drain connection electrodes can be designed to be wide. Thus, leakage failure and the like in the same layer can be reduced.

In the embodiments described above, the positional relationship between the photo-spacers and the through holes was set by moving the positions of the through holes 16a while fixing the positions of the first photo-spacers 23a and the second photo-spacers 23b. Alternatively, according to the present invention, the positional relationship between the photo-spacers and the through holes may be set by moving the positions of the photo-spacers while fixing the positions of the through holes. Otherwise, these ways of setting the positional relationship may be combined.

In the embodiments described above, in one first pixel row La and one second pixel row Lb adjacent to each other, any two adjacent first photo-spacers 23a were placed to stand on the sides of the corresponding through holes adjacent to each other that are inside with respect to the adjacent through holes. Alternatively, according to the present invention, the first photo-spacers may be placed to stand on the sides of the corresponding through holes adjacent to each other that are outside with respect to the adjacent through holes.

In the embodiments described above, one first pixel row La and one second pixel row Lb were adjacent to each other. Alternatively, according to the present invention, the first pixel row La and the second pixel row Lb may be apart from each other. In other words, one or more pixel rows in which no special positional relationship is set between photo-spacers and through holes may be interposed between the first pixel row La and the second pixel row Lb, and a set of such pixel rows may be repeated.

### (Sixth Embodiment)

FIG. 10 is a plan view schematically showing a liquid crystal display panel 50f of this embodiment.

In the liquid crystal display panels of the foregoing embodiments, the first photo-spacers 23 a are placed to stand on one side of the corresponding through holes 16a in the first pixel rows La, and the first photo-spacers 23a are placed to stand on the opposite side of the corresponding through holes 16a in the second pixel rows Lb. In the liquid crystal display panel 50f of this embodiment, however, the first photo-spacers 23a are placed not to overlap the corresponding through holes 16a, and the second photo-spacers 23b are placed to overlap the corresponding through holes 16a.

In the liquid crystal display panel 50f of this embodiment, the first photo-spacers 23a that are in contact with the surface of the active matrix substrate in normal times are placed not to overlap the through holes 16a. Thus, the cell thickness can be maintained reliably. Also, the second photo-spacers 23b that are shorter than the first photo-spacers 23a and come into contact with the surface of the active matrix substrate when the panel surface is depressed are placed to overlap the through holes 16a. Thus, decrease in the aperture ratio of the pixels can be reduced. Accordingly, it is possible to reduce decrease in the aperture ratio of pixels while maintaining the stability of the cell thickness control by the photo-spacers.

In the embodiments described above, no mention was made of the alignment scheme of the liquid crystal layer. In a VA-scheme liquid crystal display panel such as an advanced super view (ASV) LCD, each of the photo-spacers in the above embodiments may be used as the center of alignment in the liquid crystal layer.

In the embodiments described above, the first photo-spacers and the second photo-spacers were used as examples of the photo-spacers. According to the present invention, only the photo-spacers that are in contact with the surface of the active matrix substrate in normal times may be provided.

In the embodiments described above, each photo-spacer was placed at approximately the center of each pixel (approximately the center of each reflection region in the transflective type). Alternatively, the photo-spacer may be placed anywhere within each pixel.

In the embodiments described above, the liquid crystal display panels provided with TFTs as switching elements were used as an example. The present invention is also applicable to liquid crystal display panels provided with other types of switching elements such as MIM (metal insulator metal) elements.

### INDUSTRIAL APPLICABILITY

As described above, the present invention, capable of reducing decrease in the aperture ratio of pixels while maintaining the stability of the cell thickness control by photo-spacers, is useful in liquid crystal display panels having photo-spacers placed in the pixels as a whole.

## Claims

1. A liquid crystal display panel, comprising:
an active matrix substrate;
a counter substrate opposed to the active matrix substrate; and
a liquid crystal layer interposed between the active matrix substrate and the counter substrate,
the active matrix substrate including a plurality of switching elements formed on a first transparent substrate, an insulating film formed to cover the switching elements, and a plurality of pixel electrodes formed on the insulating film in a matrix to be connected to the corresponding switching elements via through holes formed through the insulating film for the respective switching elements,
the counter substrate including photo-spacers formed to stand on a second transparent substrate to maintain the thickness of the liquid crystal layer,
a plurality of pixels being defined in a matrix in correspondence with the pixel electrodes,
wherein
the liquid crystal display panel includes a first pixel row having a plurality of pixels in a row in which the photo-spacers are placed to stand on one side of the corresponding through holes, and a second pixel row having a plurality of pixels in a row in which the photo-spacers are placed to stand on the opposite side of the corresponding through holes.

2. The liquid crystal display panel of claim 1, wherein
the first pixel row and the second pixel row are adjacent to each other.

3. The liquid crystal display panel of claim 1 or 2, wherein
the insulating film is a resin film.

4. The liquid crystal display panel of any one of claims 1-3, wherein
the photo-spacers include first photo-spacers and second photo-spacers shorter than the first photo-spacers.

5. The liquid crystal display panel of any one of claims 1-4, wherein
the photo-spacers are formed to be centers of alignment in the liquid crystal layer.

6. The liquid crystal display panel of any one of claims 1-5, wherein
the active matrix substrate includes a plurality of gate lines formed to extend in parallel with each other, a plurality of source lines formed to extend in parallel with each other in a direction crossing the gate lines, and a plurality of capacitor lines formed to extend in parallel with each other along the gate lines, and
the photo-spacers and the corresponding through holes are formed along the source lines to overlap the capacitor lines.

7. The liquid crystal display panel of any one of claims 1-5, wherein
the active matrix substrate includes a plurality of gate lines formed to extend in parallel with each other, a plurality of source lines formed to extend in parallel with each other in a direction crossing the gate lines, and a plurality of capacitor lines formed to extend in parallel with each other along the gate lines, and
the photo-spacer and the corresponding through hole are formed along the gate lines to overlap the capacitor lines.

8. A liquid crystal display panel, comprising:
an active matrix substrate;
a counter substrate opposed to the active matrix substrate; and
a liquid crystal layer interposed between the active matrix substrate and the counter substrate,
the active matrix substrate including a plurality of switching elements formed on a first transparent substrate, an insulating film formed to cover the switching elements, and a plurality of pixel electrodes formed on the insulating film in a matrix to be connected to the corresponding switching elements via through holes formed through the insulating film for the respective switching elements,
the counter substrate including first photo-spacers and the second photo-spacers shorter than the first photo-spacers, both formed to stand on a second transparent substrate to maintain the thickness of the liquid crystal layer,
wherein
the first photo-spacers are formed not to overlap the through holes, and
the second photo-spacers are formed to overlap the through holes.
